# EUROPÄISCHE PATENTANMELDUNG

(11) **EP 4 249 391 A1**
(43) Veröffentlichungstag der Anmeldung: **27.09.2023**
(21) Anmeldenummer: 22163201.1
(22) Anmeldetag: 21.03.2022
(51) Int. Cl.: B65D 65/46, B65D 81/38, B65D 21/02, B65D 85/72, B29C 44/08

(54) **BEHÄLTER ZUM TRANSPORT VON GÜTERN, VERFAHREN ZUR HERSTELLUNG EINES BEHÄLTERS ZUM TRANSPORT VON GÜTERN SOWIE VERWENDUNG MINDESTENS EINES BEHÄLTERS ZUM TRANSPORT VON GÜTERN**

(71) Anmelder: Thorsten, Michel, 56355 Lautert (DE); Wäckerle, Uwe, 64367 Mühltal (DE)
(72) Erfinder: Thorsten, Michel, 56355 Lautert (DE); Wäckerle, Uwe, 64367 Mühltal (DE)
(74) Vertreter: dompatent von Kreisler Selting Werner - Partnerschaft von Patent- und Rechtsanwälten mbB

(57) **Zusammenfassung**

Die vorliegende Erfindung betrifft einen Behälter zum Transport von Gütern, insbesondere zum Transport von Lebensmitteln, sowie ein diesbezügliches Herstellungsverfahren für die Herstellung eines Behälters zum Transport von Gütern sowie die Verwendung eines Behälters zum Transport von Gütern und den Transport von Lebensmitteln.

## Beschreibung

Die vorliegende Erfindung betrifft einen Behälter zum Transport von Gütern, wie insbesondere zum Lebensmitteltransport sowie ein diesbezügliches Herstellungsverfahren für die Herstellung eines entsprechenden Behälters sowie die Verwendung eines Behälters zum Transport von Gütern insbesondere für den Transport von Lebensmitteln.

Aus dem Stand der Technik sind bereits Behälter zum Transport von Gütern, umfassend zumindest eine erste Partikelschaumschicht, gebildet aus einem ersten neuen, nicht wiederaufbereiteten, Kunststoffrohmaterial, bekannt geworden. Ebenfalls sind aus dem Stand der Technik Herstellungsverfahren zur Herstellung von derartigen Behältern zum Transport von Gütern hinlänglich bekannt.

Nachteilig an den aus dem Stand der Technik bekannten Behältern zum Transport von Gütern, welche zumindest aus einer ersten Partikelschaumschicht gebildet werden, ist, dass diese bei Verwendung zum Transport von Lebensmitteln vollständig aus einem lebensmittelechten, neuen, Kunststoffrohmaterial hergestellt werden müssen. Eine Fertigung aus rezykliertem beziehungsweise wiederaufbereitetem Kunststoffrohmaterial ist dabei aufgrund der zwingend notwendigen Lebensmittelechtheit ausgeschlossen, da die rezyklierten und wiederaufbereiteten Kunststoffrohmaterialien immer über einen gewissen Fremd- bzw. Verunreinigungsanteil in dem rezyklierten Kunststoffrohmaterial verfügen. Die vorbezeichneten verunreinigten wiedergewonnenen Rohmaterialien dürfen nicht in Verbindung mit den Lebensmitteln gelangen, um eben die hohen Sicherheitsanforderungen der Lebensmittelsicherheit gewährleisten und mögliche Gefahren für den Verbraucher sicher ausschließen zu können.

Ausgehend von den vorbezeichneten Nachteilen des Standes der Technik liegt der vorliegenden Anmeldung die Aufgabe zugrunde, einen verbesserten Behälter zum Transport von Gütern, wie insbesondere zum Transport von Lebensmitteln, bereitzustellen, welcher umweltfreundlicher als die aus dem Stand der Technik bekannten Behälter hergestellt werden kann, und insbesondere über einen Rezyklat-Anteil im verwendeten Kunststoffrohmaterial verfügt.

Erfindungsgemäß gelöst wird die Aufgabe gemäß einem Aspekt der Erfindung durch einen Behälter zum Transport von Gütern, insbesondere einem Lebensmitteltransportbehälter, welcher zumindest eine erste Partikelschaumschicht, gebildet aus einem ersten neuen/nicht wieder aufbereiteten Kunststoffmaterial, sowie zumindest eine zweite Partikelschaumschicht, welche gebildet ist aus einem zweiten wiederaufbereiteten oder alternativ aus einem zweiten neuen/nicht wiederaufbereiteten Kunststoffmaterial, umfasst. Die mindestens eine erste Partikelschaumschicht bedeckt und/oder umgibt die mindestens eine zweite Partikelschaumschicht zumindest in Teilbereichen, und die mindestens eine erste Partikelschaumschicht bildet eine Trennschicht gegenüber der mindestens einen zweiten Partikelschaumschicht für die in dem Behälter zu transportierenden Güter, wie insbesondere die in dem Behälter zu transportierenden Lebensmittel.

Der erfindungsgemäße Behälter zum Transport von Gütern beziehungsweise der Transportbehälter für Lebensmittel weist den Vorteil auf, dass lediglich die dem zu transportierenden Gütern, beziehungsweise die den zu transportierenden Lebensmitteln zugewandte erste Partikelschaumschicht die geforderten Spezifikationen im Hinblick auf den Kontakt mit den zu transportierenden Gütern, wie insbesondere eine Lebensmittelverträglichkeit, aufweisen muss.

Aufgrund der Ausgestaltung der ersten Partikelschaumschicht als Trennschicht, welche die zweite Partikelschaumschicht zumindest in Teilbereichen bedeckt und/oder diese umgibt, kann erfindungsgemäß die zweite Partikelschaumschicht aus einem wiederaufbereiteten rezyklierten Kunststoffrohmaterial oder aus einem neuen, nicht wiederaufbereiteten, Kunststoffrohmaterial gebildet werden, welches die zuvor bezeichneten Spezifikationen, beispielsweise eine Lebensmittelechtheit, nicht erfüllt, da durch die erfindungsgemäße Ausgestaltung nur die erste Partikelschaumschicht in Kontakt mit den zu transportierenden Gütern, wie insbesondere den Lebensmitteln, gelangt, und gleichzeitig für diese als Sperrschicht gegenüber der zweiten Partikelschaumschicht dient.

Partikelschaumschichten können unter Verwendung von Werkzeugformen hergestellt werden, die eine formgebende Kavität bzw. Formraum aufweisen. Das Kunststoffrohmaterial zur Bildung der Partikelschaumschichten kann als mit Treibmittel beladenes Mikrogranulat bereitgestellt werden, welches in einem ersten Prozessschritt (Vorschäumen) zunächst zu sogenannten Schaumperlen vorgeschäumt wird. Beim Vorschäumen bewirkt der Wasserdampf, dass die thermoplastische Matrix des Mikrogranulats erweicht und darin gelöste Treibmittel in die Gasphase übergehen, so dass sich eine Schaumstruktur (das heißt die Schaumperlen) ausbildet. Anschließend können die Schaumperlen in einem zweiten Prozessschritt (Ausschäumen) in eine Werkzeugkavität einer Werkzeugform eingebracht und darin unter Druck, Wärme und/oder durch Zufuhr von Heißwasserdampf zu einer Partikelschaumschicht ausgeschäumt werden. Der für das Vorschäumen und für das Ausschäumen erforderliche Wärmeenergie-Eintrag kann mittels Wasserdampf und/oder durch aktive Beheizung und Temperaturführung der Werkzeugform erfolgen. Im Ausschäum-Schritt wird der Wasserdampf in die Werkzeugkavität zwischen die Schaumperlen geleitet, die aufschäumen und miteinander versintern. Nach dem Abkühlen kann die Partikelschaumschicht als Partikelschaum-Formteil aus der Werkzeugform entformt und gegebenenfalls weiterverarbeitet werden. Erfindungsgemäß können die Partikelschaumschichten beispielsweise, wenn diese beispielsweise aus EPP gebildet werden, auch in einem Schritt hergestellt werden, wobei das Kunststoffrohmaterial, welches als mit Treibmittel beladenes Granulat bereitgestellt wird, direkt in eine Werkzeugform eingebracht und durch Erhitzung, Druckaufbringung und/oder Wasserdampfbeaufschlagung direkt geschäumt wird.

Unter dem Begriff des "neuen/nicht wiederaufbereiteten" Kunststoffrohmaterials soll im Rahmen der vorliegenden Erfindung ein fabrikneues Kunststoffrohmaterial verstanden werden, welches aus fabrikneuen Rohstoffen und im Gegensatz dazu nicht aus rezyklierten Rohstoffen hergestellt wird. Insofern handelt es sich bei dem Kunststoffrohmaterial, aus welchem die erste Partikelschaumschicht gebildet wird, um Neuware.

Hingegen wird unter dem Begriff des "wiederaufbereiteten/rezyklierten" Kunststoffrohmaterials im Rahmen der vorliegenden Erfindung ein recyceltes und somit aus der Kreislaufwirtschaft wiedergewonnenes Kunststoffrohmaterial verstanden, welches aus dem gleichen Kunststoffgrundmaterial wie das neue, nicht wieder aufbereitete, Kunststoffrohmaterial der ersten Partikelschaumschicht gebildet werden kann, jedoch zusätzlich aufgrund der Wiederaufbereitung unter dem Rezyklierungsprozess über Verunreinigungen in dem Material verfügen kann. Jedenfalls kann bei dem aus der Kreislaufwirtschaft wiedergewonnenen rezyklierten Kunststoffrohmaterial eine Verunreinigung nicht sicher ausgeschlossen werden.

Erfindungsgemäß kann es vorgesehen werden, dass die zweite Partikelschaumschicht als Kernschicht/Kernkörper des erfindungsgemäßen Transportbehälters ausgebildet wird, welche zumindest teilweise an der äußeren Oberfläche des Kernkörpers durch die mindestens eine erste Partikelschaumschicht zumindest in Oberflächenteilbereichen bedeckt beziehungsweise überdeckt ist, beziehungsweise in Teilbereichen durch das mindestens eine erste Kunststoffrohmaterial und der entsprechenden ersten Partikelschaumschicht umschlossen ist.

Erfindungsgemäß kann es dabei vorgesehen werden, die mindestens eine erste Partikelschaumschicht aus einem lebensmittelechten Kunststoffmaterial auszubilden. Die vorbezeichnete Ausführungsform weist dabei den Vorteil auf, dass der Behälter zum Transport von Gütern eben den dem Transport zugewandten Oberflächen über die erste Partikelschaumschicht gebildet ist, welche insbesondere lebensmittelecht ausgestaltet ist, derart, dass der Behälter, obwohl die zweite Partikelschaumschicht nicht den Forderungen der Lebensmittelechtheit entspricht, trotzdem für den Transport von Lebensmitteln sicher ist und verwendet werden kann.

Im Rahmen der Erfindung werden Materialien als lebensmittelecht verstanden, welche beispielsweise der Verordnung (EG) Nr. 1935/2004 entsprechen, oder Materialien, wie insbesondere Polymere, welche im Hinblick auf deren Eignung zum Kontakt mit Lebensmitteln unbedenklich sind und damit ähnlichen Forderungen wie die in der vorbezeichneten Verordnung aufgestellten Erfordernissen entsprechen.

Alternativ kann es auch vorgesehen werden, die mindestens eine erste Partikelschaumschicht an die geforderten Bedingungen für den Transport der jeweiligen Güter auszugestalten beziehungsweise dafür ertüchtigte Materialien zur Herstellung der ersten Partikelschaumschicht zu verwenden. Beispielsweise kann es vorgesehen werden, die erste Partikelschaumschicht herzustellen, die eine Beständigkeit gegen die Einwirkung von bestimmten Strahlen, wie insbesondere UV-Strahlen, aufweist. Ebenso können Kunststoffrohmaterialien zur Bildung der mindesten einen ersten Partikelschaumschicht erfindungsgemäß Verwendung finden, die eine Beständigkeit gegenüber bestimmten Chemikalien und/oder Ölen, Fetten und Kraftstoffen aufweisen.

Die erfindungsgemäße Ausgestaltung weist den Vorteil auf, dass lediglich die mindestens eine mit dem Transportgut unmittelbar in Kontakt stehende Partikelschaumschicht aus einem Material mit Eignung zum Kontakt mit dem Transportgut verfügen muss, die mindestens eine zweite Partikelschaumschicht kann dabei nahezu aus einem beliebigen schäumbaren Rohmaterial, insbesondere Kunststoffrohmaterial, bestehen, welches nicht die Forderungen der Eignung an den Kontakt mit dem Transportgut erfüllen muss. So können erfindungsgemäß auch verunreinigte Kunststoffrohmaterialien und/oder nicht sortenreine Kunststoffrohmaterialien zur Herstellung der mindestens einen zweiten Partikelschaumschicht genutzt werden.

Erfindungsgemäß kann es vorgesehen werden, dass die mindestens eine erste Partikelschaumschicht zumindest an der den zu transportierenden Gütern zugewandten Oberfläche eine geschlossene Oberfläche aufweist.

Im Rahmen der vorliegenden Erfindung wird unter einer geschlossenen Oberfläche eine standardgeschäumte Partikelschaumschicht mit einer hohen Dichte verstanden, welche insbesondere wasserdicht ausgeführt werden kann, und insbesondere bevorzugt migrationsdicht ausgeführt werden kann.

Es kann vorgesehen sein, dass die mindestens eine erste Partikelschaumschicht eine Wandstärke von mindestens 1 mm aufweist.

Die Wandstärke wird gemessen entlang einer Geraden, welche orthogonal zu dem Verlauf der Oberfläche der ersten Partikelschaumschicht verläuft, besonders bevorzugt entlang einer Geraden orthogonal zu der Tangente des höchsten Punktes der Oberfläche verläuft.

Besonders bevorzugt kann es vorgesehen werden, dass die mindestens eine erste Partikelschaumschicht eine erste Raumdichte und die mindestens eine zweite Partikelschaumschicht eine zweite Raumdichte aufweist, wobei die erste Raumdichte bevorzugt größer als die zweite Raumdichte ist. Die Raumdichte der ersten Schicht kann im Bereich von 20 bis 300 g/l Raumvolumen gewählt werden, und die Dichte der zweiten Partikelschaumschicht auf den Bereich zwischen 20 bis 100 g/l Raumvolumen gewählt werden.

Erfindungsgemäß kann es vorgesehen werden, die mindestens eine erste und/oder zweite Partikelschaumschicht aus einem Material, ausgewählt aus der Gruppe von: expandiertes Polystyrol (EPS), expandiertes Polypropylen (EPP), expandiertes Polyethylen (EPE), expandiertes thermoplastisches Polyurethan (ETPU), expandiertes Polylactid (EPLA), geschäumtes Polyethylenterephthalat (EPET), expandiertes Polycarbonat (EPC) und Mischungen davon, auszubilden.

Erfindungsgemäß kann es vorgesehen sein, dass das Gewichtsverhältnis der mindestens einen zweiten Partikelschaumschicht relativ zu der ersten mindestens einen ersten Partikelschaumschicht im Bereich von 1/1 bis 50/1 liegt.

In einer bevorzugten Ausführungsform kann es vorgesehen werden, dass die mindestens eine erste und/oder mindestens eine zweite Partikelschaumschicht gebildet ist aus einem expandierten oder aufgepoppten Material natürlichen Ursprungs, wie beispielsweise Popcorn, natürlichen Fasern, insbesondere Holzfasern, oder Stärke. Das Popcorn kann zunächst thermisch aufgepoppt, darauffolgend zermahlen, mit einem Bindemittel wie beispielsweise organischer Leim gebunden und darauffolgend unter Druck in der Werkezugform gepresst und erwärmt beispielsweise durch Aufbringung von Mikrowellen, HF- oder RF-Strahlen.

Das Volumenverhältnis der mindestens einen ersten Partikelschaumschicht im Vergleich zu der mindestens einen zweiten Partikelschaumschicht kann im Bereich von 1/1 bis 1/10 liegen.

Es kann vorgesehen werden, dass der Behälter einen wannenförmigen Körper mit einem Aufnahmeraum mit zumindest einer Öffnung aufweist, wobei zumindest die dem Aufnahmeraum zugewandte Oberfläche mit der mindestens einen ersten Partikelschaumschicht vollständig bedeckt ist und somit bevorzugt gegenüber der zweiten Partikelschaumschicht eine Trennschicht beziehungsweise Sperrschicht ausbildet.

Es kann auch vorgesehen werden, dass der Behälter einen schalenförmigen Körper mit einem Schaleninnenraum aufweist, wobei zumindest die dem Schaleninnenraum zugewandte Oberfläche mit der mindestens einen ersten Partikelschaumschicht vollständig bedeckt ist und somit bevorzugt gegenüber der zweiten Partikelschaumschicht eine Trennschicht beziehungsweise Sperrschicht ausbildet. Derartige schalenförmige Körper finden beispielsweise bei der Verpackung von Lebensmitteln wie beispielsweise Käse, Fleisch, Fisch, Obst und Gemüse Verwendung, welche insbesondere als Kühlwaren im Einzelhandel angeboten werden, wobei die entsprechenden Lebensmittel auf dem Schaleninnenraum des schalenförmigen Körpers aufgelegt und beispielsweise mit einer flexiblen Klarsichtfolie überdeckt und für den Endverbraucher sichtbar verpackt werden.

Der Behälter kann dabei weiterhin mindestens einen Deckel zum Verschluss der mindestens einen Öffnung aufweisen, wobei zumindest die dem Aufnahmeraum zugewandte Oberfläche des Deckels wiederum mit der mindestens einen ersten Partikelschaumschicht vollständig bedeckt ist, oder der Deckel aus einer ersten Partikelschaumschicht aus einem ersten neuen, nicht wiederaufbereiteten, Kunststoffrohmaterial ständig gebildet ist.

Der Boden des wannenförmigen Körpers kann an die Form und Größe der zumindest einen Öffnung angepasst werden, derart, dass der Behälter auf einen weiteren gleichen Behälter stapelbar ist, wobei die Oberfläche des Bodens mit der mindestens einen ersten Partikelschaumschicht vollständig bedeckt ist.

Durch die vorbezeichnete Ausführungsform der Anpassung des Bodens des wannenförmigen Behälters an die Form und Größe der Öffnung des wannenförmigen Körpers kann somit der Behälter zum Verschluss weiterer gleicher Behälter genutzt werden, wodurch auf einen separaten Deckel verzichtet werden kann, nämlich wenn die Boxen jeweils aufeinander gestapelt werden. Durch die Ausgestaltung der dem Innenraum des Behälters zugewandten Bodenoberfläche wird dabei wiederum die Lebensmittelechtheit beziehungsweise Eignung des Aufsetzens der Oberfläche des Bodens zu den zu transportierenden Gütern sichergestellt.

Insbesondere kann es vorgesehen werden, dass der Behälter eine einzige erste Partikelschaumschicht und/oder eine einzige zweite Partikelschaumschicht aufweist und dabei in einer besonders bevorzugten Ausführungsform lediglich aus einer singulären ersten und zweiten Partikelschaumschicht gebildet wird.

Insbesondere kann es erfindungsgemäß vorgesehen werden, den Behälter zum Transport von Lebensmitteln auszubilden, wobei zumindest die den Lebensmitteln zugewandte Oberfläche lebensmittelecht ausgeführt und aus der mindestens einen ersten Partikelschaumschicht gebildet ist.

Gemäß einem zweiten Aspekt betrifft die Erfindung ein Verfahren zur Herstellung eines Behälters zum Transport von Gütern, insbesondere zum Transport von Lebensmitteln, welches die Verfahrensschritte umfasst:
a) Schäumen mindestens eines ersten Teilkörpers des Behälters aus zumindest einer ersten Partikelschaumschicht, gebildet aus einem ersten neuen/nicht wiederaufbereiteten Kunststoffrohmaterial in einer ersten Werkzeugform;
b) Ausformen des mindestens einen ersten Teilkörpers aus der ersten Werkzeugform;
c1) Einbringen des mindestens einen ersten Teilkörpers in eine zweite Werkzeugform und Anschäumen zumindest einer zweiten Partikelschaumschicht, gebildet aus einem zweiten wiederaufbereiteten Kunststoffmaterial oder einem zweiten neuen/nicht wiederaufbereiteten Kunststoffmaterial an dem mindestens einen ersten Teilkörper zur Ausbildung des Behälters
   oder
c2) Schäumen mindestens eines zweiten Teilkörpers des Behälters aus zumindest einer zweiten Partikelschaumschicht, gebildet aus einem zweiten wiederaufbereiteten Kunststoffmaterial oder einem zweiten/nicht aufbereiteten Kunststoffmaterial in einer dritten Werkzeugform, Ausformen des mindestens einen zweiten Teilkörpers aus der dritten Werkzeugform und Verbinden des mindestens einen ersten und zweiten Teilkörpers zur Ausbildung des Behälters, wobei der erhaltene Behälter die Merkmale eines Behälters gemäß dem ersten Aspekt der vorläufigen Erfindung aufweist.

Alternativ kann gemäß einem dritten Aspekt der Erfindung ein Verfahren zur Herstellung eines Behälters vorgesehen werden, welches die Verfahrensschritte umfasst:
a) Schäumen mindestens eines ersten Teilkörpers des Behälters aus zumindest einer ersten Partikelschaumschicht, gebildet aus einem ersten neuen/nicht wiederaufbereiteten Kunststoffrohmaterial in einer ersten Werkzeugform, wobei der Innenraum der Werkzeugform durch einen Verdrängerkörper reduziert ist;
b) Entfernen des Verdrängerkörpers aus der ersten Werkzeugform oder Verlagern des Verdrängerkörpers der ersten Werkzeugform zur Vergrößerung des Formraums der ersten Werkzeugform;
c) Anschäumen zumindest einer zweiten Partikelschaumschicht, gebildet aus einem zweiten wiederaufbereiteten Kunststoffmaterial oder einem zweiten neuen/nicht wiederaufbereiteten Kunststoffmaterial an dem mindestens einen ersten Teilkörper zur Ausbildung des Behälters innerhalb der ersten Werkezugform,
wobei der erhaltene Behälter die Merkmale eines Behälters gemäß dem ersten Aspekt der vorliegenden Erfindung aufweist.

Unter dem Begriff des Verbindens sollen im Rahmen der vorliegenden Erfindung die Verbindungsarten des Steckens, Legens, Drückens, Klebens, Verrastens, Verhakens oder insgesamt die Herstellung einer kraft- und/oder formschlüssigen Verbindung zwischen den zu verbindenden Teilen bzw. ersten und zweiten Partikelschaumschichten verstanden werden. Insbesondere kann der erste und der zweite Teilkörpers bzw. die mindestens eine erste und zweite Partikelschaumschicht miteinander verhakt und/oder verrastet werden, hierzu können entsprechend aneinander angepasste Rastelemente vorgesehen werden.

Weiterhin kann das erfindungsgemäße Herstellungsverfahren den Schritt umfassen: Behandeln zumindest einer der dem Transportgut zugewandten Oberfläche des Schäumwerkzeuges und/oder der Behälters mittels Laserbeaufschlagung.

Gemäß einem vierten Aspekt betrifft die vorliegende Erfindung weiterhin die Verwendung mindestens eines Behälters gemäß dem ersten Aspekt der Erfindung zum Transport von Lebensmitteln.

Nachfolgend werden unter Bezugnahme auf die beigefügten Figuren beispielhafte Ausführungsformen von erfindungsgemäßen Behältern beschrieben.

Es zeigen:
- Fig. 1: eine schematische Schnittansicht einer ersten beispielhaften Ausführungsform eines erfindungsgemäßen Behälters;
- Fig. 2A: eine schematische perspektivische Ansicht einer zweiten beispielhaften Ausführungsform eines erfindungsgemäßen Behälters;
- Fig. 2B: die Aufsicht auf die zweite beispielhafte Ausführungsform des erfindungsgemäßen Behälters gemäß Fig. 2A;
- Fig. 2C: eine Schnittansicht des Behälters gemäß der zweiten beispielhaften Ausführungsform entlang der Schnittachse A in Fig. 2B;
- Fig. 2D: eine schematische Schnittansicht zweier aufeinander gestapelter erfindungsgemäßer Behälter gemäß der zweiten beispielhaften Ausführungsform.

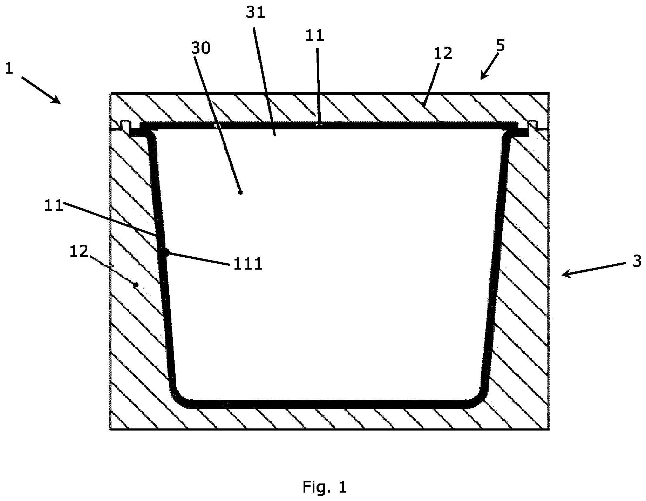

In der Fig. 1 ist eine schematische Schnittansicht einer ersten beispielhaften Ausführungsform eines erfindungsgemäßen Behälters 1 dargestellt. In der Ausführungsform gemäß Fig. 1 umfasst der erfindungsgemäße Behälter 1 einen wannenförmigen Körper 3, welcher einen Aufnahmeraum 30 zur Aufnahme eines Transportgutes, wie insbesondere zum Transport von Lebensmitteln, ausbildet beziehungsweise zumindest teilweise gegenüber der Umgebung begrenzt. Der wannenförmige Körper 3 weist eine Öffnung 31 zur Befüllung des Aufnahmeraums 30 mit dem zu transportierenden Gut (nicht dargestellt) auf.

In der beispielhaften Ausführungsform der Fig. 1 umfasst der dargestellte Behälter 1 weiterhin einen Deckel 5, womit die Öffnung 31, wie in Fig. 1 dargestellt, verschlossen ist, wodurch der Aufnahmeraum 30 gegenüber der Umgebung, wie in Fig. 1 dargestellt, allseitig begrenzt bzw. abgeschirmt ist.

Der erfindungsgemäße Behälter 1 zum Transport von Gütern umfasst in der dargestellten Ausführungsform eine einzige erste Partikelschaumschicht 11, die gebildet ist aus einem ersten neuen beziehungsweise nicht wiederaufbereiteten Kunststoffrohmaterial sowie weiterhin eine einzige zweite Partikelschaumschicht 12, welche gebildet ist aus einem zweiten wiederaufbereiteten oder alternativ aus einem zweiten neuen, nicht wiederaufbereiteten, Kunststoffmaterial.

Die erste Partikelschaumschicht 11 bedeckt in der dargestellten Ausführungsform die zweite Partikelschaumschicht 12 in den Teilbereichen, welche dem gebildeten Aufnahmeraum 30 und damit den zu transportierenden Gütern zugewandt sind. Die erste Partikelschaumschicht 11 bildet somit eine Trennschicht gegenüber der mindestens einen zweiten Partikelschaumschicht 12 für die im Behälter 1 zu transportierenden Gütern aus.

Wie bereits ausgeführt wurde, umfasst der erfindungsgemäße Behälter 1 gemäß Fig. 1 einen wannenförmigen Körper 3 sowie einen an den wannenförmigen Körper angepassten Deckel 5, wobei in der dargestellten Ausführungsform sowohl der Körper 3 als auch der Deckel 5 jeweils aus einer singulären ersten Partikelschaumschicht 11 und einer singulären zweiten Partikelschaumschicht 12 ausgebildet sind. In der Ausführungsform sind die Oberflächen des wannenförmigen Körpers 3 beziehungsweise des Behälterdeckels 5, welche dem Aufnahmeraum 30 und damit den zu transportierenden Gütern zugewandt sind und mit diesen ggf. in Kontakt kommen, jeweils vollflächig mit der ersten Partikelschaumschicht 11 bedeckt, derart, dass die erste Partikelschaumschicht 11 des wannenförmigen Körpers 3 und des Deckels 5 für die zu transportierenden Güter eine Trennschicht gegenüber den zweiten Partikelschaumschichten 12 des Körpers 3 beziehungsweise des Deckels 5 ausbilden.

Anhand der dargestellten beispielhaften Ausführungsform gemäß Fig. 1 ist sehr gut entnehmbar, dass bei dem intendierten Transport eines Lebensmittels in dem Aufnahmeraum 30 lediglich die dem Aufnahmeraum 30 zugewandten Oberflächen und damit lediglich die vorgesehenen ersten Partikelschaumschichten 11 den Erfordernissen einer Lebensmittelechtheit entsprechen müssen. In Abgrenzung dazu muss eine Lebensmittelechtheit für die zweiten Partikelschaumschichten 12 nicht mehr zwingend vorgesehen werden, derart, dass die zweiten Partikelschaumschichten 12 eben aus einem zweiten rezyklierten beziehungsweise wiederaufbereiteten Kunststoffrohmaterial mit Verunreinigungen gebildet werden kann, oder eben auch einem zweiten neuen, nicht wiederaufbereiteten, Kunststoffmaterial ausgebildet werden kann, welches den Erfordernissen beispielsweise der Lebensmittelsicherheit nicht mehr entsprechen muss.

Erfindungsgemäß kann es bevorzugt vorgesehen werden, dass die zu transportierenden Güter und insbesondere die dem Aufnahmeraum 30 zugewandten Oberflächen 111 insbesondere aus einer geschlossenen Oberfläche ausgebildet werden, welche beispielsweise wasserdicht und/oder bevorzugt migrationsdicht ausgestaltet werden kann.

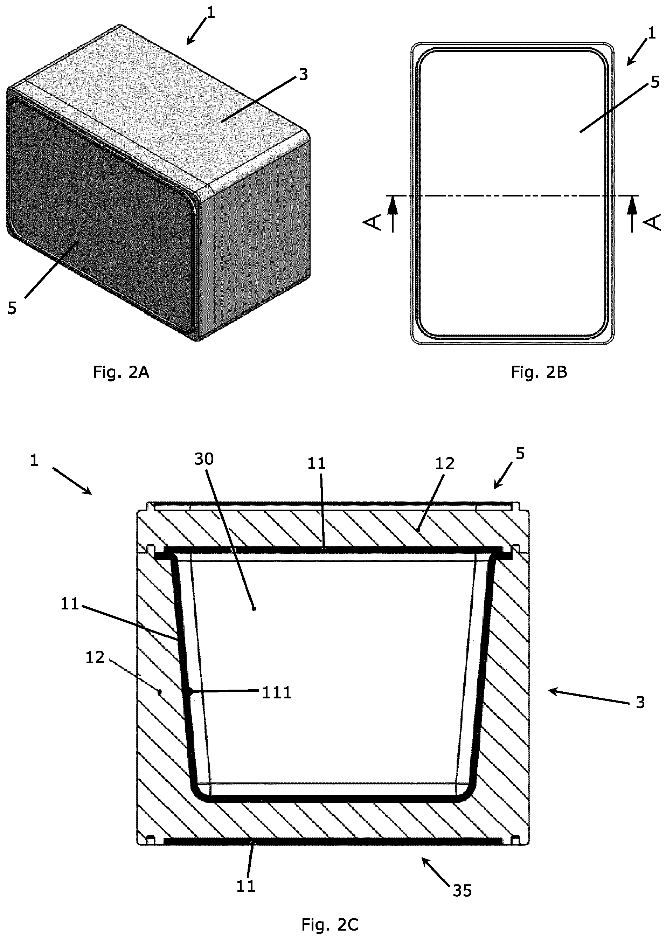

Die Fign. 2A bis 2C zeigen eine zweite beispielhafte erfindungsgemäße Ausführungsform eines Behälters 1. Wie in Fig. 1 umfasst der erfindungsgemäße Behälter 1 gemäß der Ausführungsform der Fig. 2A bis 2C einen wannenförmigen Körper 3 sowie einen Deckel 5. Die Fig. 2C stellt eine perspektivische Außenansicht auf den Behälter 1 sowie die Fig. 2B eine Aufsicht auf den Deckel 5 des erfindungsgemäßen Behälters 1 dar. In der Fig. 2B ist ebenfalls die Schnittlinie A-A gekennzeichnet, wobei die Fig. 2C die entsprechende Schnittansicht entlang der Schnittlinie A-A gemäß Fig. 2B darstellt.

Die Ausführungsform gemäß Fig. 2A bis 2C sind ähnlich dem ersten Ausführungsbeispiel gemäß Fig. 1 und unterscheiden sich lediglich dadurch, dass der vorgesehene Deckel 5 des erfindungsgemäßen Behälters 1 zunächst eine äussere Aufwölbung aufweist, wobei der wannenförmige Körper 3, welcher ebenfalls den Boden des Behälters 1 ausbildet, entsprechende Aufnahmeaussparungen für die Aufwölbung des Deckels 5 umfasst, damit die erfindungsgemäßen Behälter aufeinander stapelbar und miteinander verriegelbar sind, derart, dass diese während eines Transports nicht gegeneinander verrutschen.

Wie dieses ebenfalls der Fig. 2C entnehmbar ist, kann es vorgesehen werden, im Bereich des Bodens 35 des wannenförmigen Körpers 3 eine weitere Fläche mit der ersten Partikelschaumschicht 11 zu bedecken und beispielsweise aus einem lebensmittelechten oder zumindest an die Erfordernisse des Transportgutes angepassten Material zu fertigen.

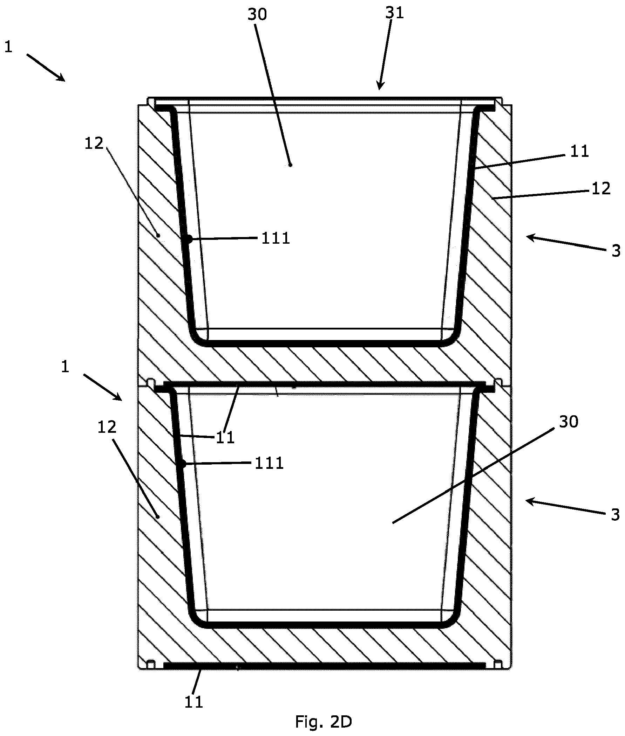

Die Fig. 2D zeigt die Vorteile des entsprechend ausgestalteten wannenförmigen Körpers 3 mit Vorsehung der ersten Partikelschaumschicht 11 im Bereich des Bodens 35. Wie dies der Fig. 2D entnehmbar ist, ermöglicht die Ausgestaltungsform eine Verwendung beispielsweise zweier erfindungsgemäßer Behälter 1, welche aufeinander gestapelt werden und durch Vorsehung der ersten Partikelschaumschicht 11 im Bereich des Bodens 35 eben durch Aufeinanderstapeln der erfindungsgemäßen Behälter auch ohne zusätzliche Deckel ein Aufnahmeraum 30 umschlossen beziehungsweise begrenzt werden kann, wobei die dem Aufnahmeraum 30 beziehungsweise dem entsprechenden Transportgut zugewandten Oberflächen 111 jeweils vollflächig aus der ersten Partikelschaumschicht 11 gebildet sind, welche an die Erfordernisse des Transportguts angepasst werden können, und insbesondere die zweite Partikelschaumschicht 12 nicht in Kontakt beziehungsweise in Verbindung mit dem zu transportierenden Gut und dem Aufnahmeraum kommt.

## Patentansprüche

1. Behälter (1) zum Transport von Gütern umfassend:
- zumindest eine erste Partikelschaumschicht (11), gebildet aus einem ersten neuen/nicht wiederaufbereiteten Kunststoffrohmaterial,
- zumindest eine zweite Partikelschaumschicht (12), gebildet aus einem zweiten wiederaufbereiteten oder alternativ aus einem zweiten neuen/nicht wiederaufbereiteten Kunststoffmaterial,
wobei die mindestens eine erste Partikelschaumschicht (11) die mindestens eine zweite Partikelschaumsicht (12) zumindest in Teilbereichen bedeckt und/oder umgibt;
wobei die mindesten eine erste Partikelschaumschicht (11) eine Trennschicht gegenüber der mindestens einen zweiten Partikelschaumschicht (12) für die in dem Behälter (1) zu transportierenden Güter bildet.

2. Behälter (1) nach Anspruch 1, wobei die mindestens eine erste Partikelschaumschicht (11) aus einem lebensmittelechten Kunststoffmaterial gebildet ist.

3. Behälter (1) nach Anspruch 1 oder 2, wobei die mindestens eine erste Partikelschaumschicht (11) zumindest an der den zu transportierenden Gütern zugewandten Oberfläche (111) eine geschlossene Oberfläche aufweist.

4. Behälter (1) nach einem der vorausgehenden Ansprüche, wobei die mindestens eine erste Partikelschaumschicht (11) eine Wandstärke von mindestens 1 mm aufweist.

5. Behälter (1) nach einem der vorausgehenden Ansprüche, wobei die mindestens eine erste Partikelschaumschicht (11) eine erste Raumdichte und die mindestens eine zweite Partikelschaumschicht (12) eine zweite Raumdichte aufweist und wobei die erste Raumdichte größer als die zweite Raumdichte ist.

6. Behälter (1) nach einem der vorausgehenden Ansprüche, wobei die mindestens eine erste (11) und/oder zweite Partikelschaumschicht (12) gebildet ist aus einem Material ausgewählt aus der Gruppe von: expandiertes Polystyrol (EPS), expandiertes Polypropylen (EPP), expandiertes Polyethylen (EPE), expandiertes thermoplastisches Polyurethan (ETPU), expandiertes Polylactid (EPLA), geschäumtes Polyethylenterephthalat (EPET), expandiertes Polycarbonat (EPC) und Mischungen davon.

7. Behälter (1) nach einem der vorausgehenden Ansprüche, wobei die mindestens eine erste (11) und/oder zweite Partikelschaumschicht (12) gebildet ist aus expandierten oder aufgepoppten Materialien natürlichen Ursprungs, wie beispielsweise Popcorn.

8. Behälter (1) nach einem der vorausgehenden Ansprüche, wobei das Volumenverhältnis der mindestens einen ersten Partikelschaumschicht (11) im Vergleich zu der mindestens einen zweiten Partikelschaumschicht (12) im Bereich von 1/1 bis 1/10 liegt.

9. Behälter (1) nach einem der vorausgehenden Ansprüche, wobei der Behälter (1) einen wannenförmigen Körper (3) mit einem Aufnahmeraum (30) mit zumindest einer Öffnung (31) aufweist, wobei zumindest die dem Aufnahmeraum (30) zugewandte Oberfläche (111) mit der mindestens einen ersten Partikelschaumschicht (11) vollständig bedeckt ist.

10. Behälter nach Anspruch 9, wobei der Behälter (1) weiterhin mindestens einen Deckel (3) zum Verschluss der mindestens einen Öffnung (31) aufweist, wobei zumindest die dem Aufnahmeraum (30) zugewandte Oberfläche (111) mit der mindestens einen ersten Partikelschaumschicht (11) vollständig bedeckt ist oder der Deckel (3) aus einer ersten Partikelschaumschicht (11) aus einem ersten neuen/nicht wiederaufbereiteten Kunststoffrohmaterial gebildet ist.

11. Behälter (1) nach Anspruch 9, wobei der Boden (35) des wannenförmigen Körpers (3) an die Form und Größe der zumindest einen Öffnung (31) angepasst ist, derart, dass der Behälter (1) auf einen weiteren Behälter (1) stapelbar ist, wobei die Oberfläche des Bodens (35) mit der mindestens einen ersten Partikelschaumschicht (11) zumindest teilweise bedeckt ist.

12. Behälter (1) nach einem der vorausgehenden Ansprüche, wobei der Behälter (1) eine einzige erste Partikelschaumschicht (11) und/oder eine einzige zweite Partikelschaumschicht (12) aufweist.

13. Behälter (1) nach einem der vorausgehenden Ansprüche, wobei der Behälter (1) zum Transport von Lebensmitteln ausgebildet ist, wobei zumindest die den Lebensmitteln zugewandte Oberfläche lebensmittelecht ausgeführt und aus der mindestens einen Partikelschaumschicht (11) gebildet ist.

14. Verfahren zur Herstellung eines Behälters (1) umfassend die Verfahrensschritte:
a) Schäumen mindestens eines ersten Teilkörpers des Behälters (1) aus zumindest einer ersten Partikelschaumschicht (11), gebildet aus einem ersten neuen/nicht wiederaufbereiteten Kunststoffrohmaterial in einer ersten Werkzeugform;
b) Ausformen des mindestens einen ersten Teilkörpers aus der ersten Werkzeugform;
c1) Einbringen des mindestens einen ersten Teilkörpers in eine zweite Werkzeugform und Anschäumen zumindest einer zweiten Partikelschaumschicht (12) gebildet aus einem zweiten wiederaufbereiteten Kunststoffmaterial oder einem zweiten neuen/nicht wiederaufbereiteten Kunststoffmaterial an dem mindestens einen ersten Teilkörper zur Ausbildung des Behälters (1)
oder
c2) Schäumen mindestens eines zweiten Teilkörpers des Behälters (1) aus zumindest einer zweiten Partikelschaumschicht (12), gebildet aus einem zweiten wiederaufbereiteten Kunststoffmaterial oder einem zweiten/nicht aufbereiteten Kunststoffmaterial in einer dritten Werkzeugform, Ausformen des mindestens einen zweiten Teilkörpers aus der dritten Werkzeugform und Verbinden des mindestens einen ersten und zweiten Teilkörpers zur Ausbildung des Behälters (1); wobei der Behälter (1) bevorzugt die Merkmale gemäß einem der Ansprüche 1 bis 13 aufweist.

15. Verfahren zur Herstellung eines Behälters (1) umfassend die Verfahrensschritte:
a) Schäumen mindestens eines ersten Teilkörpers des Behälters (1) aus zumindest einer ersten Partikelschaumschicht (11), gebildet aus einem ersten neuen/nicht wiederaufbereiteten Kunststoffrohmaterial in einer ersten Werkzeugform, wobei der Formraum der Werkzeugform durch einen Verdrängerkörper reduziert ist;
b) Entfernen des Verdrängerkörpers aus der ersten Werkzeugform oder Verlagern des Verdrängerkörpers der ersten Werkzeugform zur Vergrößerung des Formraums der ersten Werkzeugform;
c) Anschäumen zumindest einer zweiten Partikelschaumschicht (12), gebildet aus einem zweiten wiederaufbereiteten Kunststoffmaterial oder einem zweiten neuen/nicht wiederaufbereiteten Kunststoffmaterial an dem mindestens einen ersten Teilkörper zur Ausbildung des Behälters (1) innerhalb der ersten Werkezugform;
wobei der Behälter bevorzugt die Merkmale gemäß einem der Ansprüche 1 bis 13 aufweist.

16. Verfahren nach Anspruch 14 oder 15, wobei das Herstellungsverfahren weiterhin den Schritt umfasst:
d) Behandeln zumindest einer der dem Transportgut zugewandten Oberfläche des Behälters und/oder einer Werkzeugoberfläche mittels Laserbeaufschlagung.

17. Verfahren nach einem der Ansprüche 14 bis 16, wobei das Herstellungsverfahren weiterhin den Schritt umfasst:
Verhaken oder Verrasten des mindestens einen ersten und zweiten Teilkörpers oder der mindestens einen ersten und zweiten Partikelschaumschicht

18. Verwendung mindestens eines Behälters (1) mit den Merkmalen gemäß mindestens einem der Ansprüche 1 bis 13 zum Transport von Lebensmitteln.
